# FASCICULE DE BREVET EUROPEEN

(11) **EP 1 334 904 B1**
(45) Date de publication et mention de la délivrance du brevet: **21.12.2005**
(21) Numéro de dépôt: 03290031.8
(22) Date de dépôt: 07.01.2003
(51) Int. Cl.: B63C 11/22, A62B 9/04, G05D 16/06

(54) **Détendeur de gaz sous pression respirable**
Regelventil zum Reduzieren des Druckes eines Gases auf ein einatembares Niveau
Valve for reducing the pressure of a gas to a breathable level

(30) Priorité: 08.01.2002 FR 0200149
(43) Date de publication de la demande: 13.08.2003
(73) Titulaire: LA SPIROTECHNIQUE INDUSTRIELLE ET COMMERCIALE, 06510 Carros (FR)
(72) Inventeur: Peyron, Nicolas, 06610 La Gaude (FR)
(74) Mandataire: Le Moenner, Gabriel

(56) Documents cités:
- GB-A- 2 224 957
- US-A- 1 456 570
- US-A- 4 558 696
- US-A- 5 413 096

## Description

La présente invention concerne les détendeurs de gaz sous pression respirables et plus particulièrement les détendeurs destinés à la plongée sous-marine, du type comprenant un passage d'entrée de gaz connectable à une source de gaz sous pression et incorporant un filtre.

Un détendeur de ce type est décrit par exemple dans le document US-A-5,413,096 - US Divers Co.

Le filtre dans le passage d'entrée permet de protéger le mécanisme du détendeur, ainsi que celui du régulateur aval, mais aussi l'utilisateur des particules éventuelles contenues dans la source de gaz sous pression. Toutefois, lors des manipulations de démontage du détendeur de cette source de gaz sous pression, le plus souvent immédiatement après une plongée, la source, comme le détendeur et les parties annexes sont ruisselantes et des gouttelettes peuvent entrer en contact avec le filtre dont la consistance spongieuse favorise le maintien de l'humidité et donc une accélération de la corrosion des mécanismes, d'autant qu'après cette séparation de la source de gaz comprimé, l'entrée est généralement obturée par un bouchon protecteur, notamment pour les opérations de rinçage avant stockage.

La présente invention a pour objet de proposer une structure de détendeur évitant les inconvénients ci-dessus.

Pour ce faire, le détendeur comporte une structure de piège à eau dans le passage d'entrée, en amont du filtre.

Selon des caractéristiques plus particulières de l'invention
- la structure de piège à eau comprend au moins un conduit de passage de gaz de section réduite et, avantageusement, au moins un volume de rétention autour du conduit de passage de gaz.

D'autres caractéristiques et avantages de la présente invention ressortiront de la description suivante d'un mode de réalisation, donnée à titre illustratif mais nullement limitatif, faite en relation avec les dessins annexés, sur lesquels :
- la Figure 1 est une vue en coupe d'un mode de réalisation de détendeur selon l'invention ; et
- la Figure 2 est une vue en coupe partielle agrandie de la Figure 1.

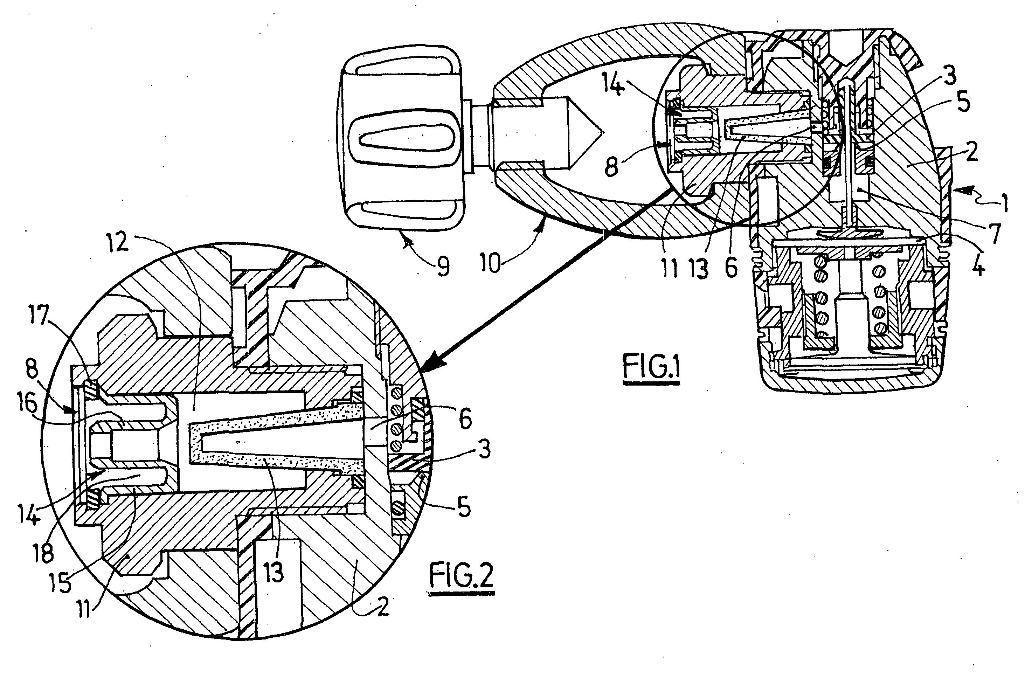

Sur la Figure 1, on reconnaît un détendeur dit de premier étage, désigné généralement par la Référence 1, comprenant, dans un corps 2, un équipage mobile de clapet 3 commandé par un diaphragme 4 et coopérant sélectivement avec un siège de clapet 5 entre un orifice d'entrée de gaz sous pression 6 et une chambre 7 de sortie de gaz détendu acheminé vers un circuit respiratoire aval (non représenté).

Le détendeur comprend une extrémité d'entrée 8 destinée à être raccordée à une sortie d'un corps de robinet de bouteille de gaz fixée contre l'entrée 8 par un pointeau de serrage 9 porté par un étrier 10 solidarisé au corps de détendeur 2.

Dans le mode de réalisation représenté, l'entrée 8 est formée par une pièce d'entrée interchangeable 11 montée latéralement dans le corps 2 en regard de l'orifice d'entrée 6 et définissant un passage d'entrée de gaz 12 vers ce dernier.

Dans la partie aval de la pièce d'entrée 11 est monté un filtre 13, typiquement en métal fritté, avantageusement de forme tronconique comme représenté.

Selon un aspect de l'invention, dans la partie amont du passage d'entrée 12 est montée une structure de piège à eau 14 constituée, dans l'exemple représenté, sous la forme d'une pièce tubulaire monobloc avec une jupe cylindrique périphérique 15 emmanchée dans le passage 12 et une partie tubulaire centrale coaxiale 16 s'étendant vers l'avant sensiblement jusqu'au plan du circlips 17 maintenant la pièce 14 contre son épaulement dans le passage d'entrée 12.

Avec un tel agencement, on constate que le filtre 13 (ainsi que le circuit pneumatique aval) est protégé de l'extérieur par le piège à eau 15 dont la partie tubulaire centrale 16 forme un passage d'entrée de gaz de section réduite dans l'alignement du filtre 13 entouré par une gouttière annulaire 18 ouvrant vers l'extérieur, collectant et retenant la quasi-totalité des gouttelettes susceptibles de pénétrer dans le passage 12 via son entrée 8 et empêchant cette eau collectée de s'écouler par la suite jusqu'au filtre 13, quelle que soit l'inclinaison du détendeur. Un secouage ou un simple renversement vers le bas du détendeur permet d'évacuer l'eau éventuellement accumulée dans la gouttière 18.

Bien que la présente invention ait été décrite en relation avec un mode de réalisation particulier, elle ne s'en trouve pas limitée mais est susceptible de modifications et de variantes qui apparaîtront à l'homme de métier dans le cadre des revendications ci-après.

## Revendications

1. Détendeur de gaz sous pression respirable, comprenant un passage d'entrée de gaz (12) connectable à une source de gaz sous pression et incorporant un filtre (13), **caractérisé en ce qu'**il comporte une structure de piège à eau (14) dans le passage d'entrée (12), en amont du filtre (13).

2. Détendeur selon la revendication 1, **caractérisé en ce que** la structure du piège à eau (14) comprend au moins un conduit de passage de gaz de section réduite (16).

3. Détendeur selon la revendication 2, **caractérisé en ce que** la structure du piège à eau (14) comprend au moins un volume de rétention de liquide (18) autour du conduit de passage de gaz (16).

4. Détendeur selon l'une des revendications précédentes, **caractérisé en ce que** la structure du piège à eau (14) est annulaire et insérée dans le passage d'entrée (12).

5. Détendeur selon la revendication 4, **caractérisé en ce que** la structure du piège à eau (14) comporte une jupe périphérique (15) et une partie tubulaire centrale coaxiale (16) formant le conduit de passage de gaz.

6. Détendeur selon l'une des revendications 4 et 5, **caractérisé en ce que** la structure du piège à eau est retenue dans le passage d'entrée (12) par un circlips (17).

7. Détendeur selon l'une des revendications précédentes, **caractérisé en ce que** le filtre (13) et la structure de piège à eau (14) sont disposés dans une pièce d'entrée (11) montée dans le corps (2) du détendeur (1).

## Patentansprüche

1. Atemgasdruckminderventil mit einem Gaseinlasskanal (12), der mit einer Druckgasquelle verbindbar ist und einen Filter (13) enthält, **dadurch gekennzeichnet, dass** es im Einlasskanal (12) stromaufwärts des Filters (13) eine Wasserfallenkonstruktion (14) aufweist.

2. Druckminderventil nach Anspruch 1, **dadurch gekennzeichnet, dass** die Wasserfallenkonstruktion (14) mindestens eine Gasströmungsleitung mit verkleinertem Querschnitt (16) umfasst.

3. Druckminderventil nach Anspruch 2, **dadurch gekennzeichnet, dass** die Wasserfallenkonstruktion (14) mindestens ein Flüssigkeitsrückhaltevolumen (18) um die Gasströmungsleitung (16) herum umfasst.

4. Druckminderventil nach einem der vorhergehenden Ansprüche, **dadurch gekennzeichnet, dass** die Wasserfallenkonstruktion (14) ringförmig und im Einlasskanal (12) eingesetzt ist.

5. Druckminderventil nach Anspruch 4, **dadurch gekennzeichnet, dass** die Wasserfallenkonstruktion (14) eine Umfangsschürze (15) und einen röhrenförmigen koaxialen Mittelteil (16) aufweist, der die Gasströmungsleitung bildet.

6. Druckminderventil nach einem der Ansprüche 4 und 5, **dadurch gekennzeichnet, dass** die Wasserfallenkonstruktion durch einen Sicherungsring (17) im Einlasskanal (12) festgehalten wird.

7. Druckminderventil nach einem der vorhergehenden Ansprüche, **dadurch gekennzeichnet, dass** der Filter (13) und die Wasserfallenkonstruktion (14) in einem im Körper (2) des Druckminderventils (1) angebrachten Einlassteil (11) angeordnet sind.

## Claims

1. Breathable pressurized-gas reducing valve comprising a gas inlet passage (12) connectable to a source of pressurized gas and incorporating a filter (13), **characterized in that** it comprises a water trap structure (14) in the inlet passage (12) upstream of the filter (13).

2. Reducing valve according to Claim 1, **characterized in that** the water trap structure (14) comprises at least one reduced cross section gas passage conduit (16).

3. Reducing valve according to Claim 2, **characterized in that** the water trap structure (14) comprises at least one liquid retaining volume (18) around the gas passage conduit (16).

4. Reducing valve according to one of the preceding claims, **characterized in that** the water trap structure (14) is annular and inserted in the inlet passage (12).

5. Reducing valve according to Claim 4, **characterized in that** the water trap structure (14) comprises a peripheral skirt (15) and a coaxial central tubular part (16) forming the gas passage conduit.

6. Reducing valve according to either of Claims 4 and 5, **characterized in that** the water trap structure is held in the inlet passage (12) by a circlip (17).

7. Reducing valve according to one of the preceding claims, **characterized in that** the filter (13) and the water trap structure (14) are arranged in an inlet component (11) mounted in the body (2) of the reducing valve (1).
